# EUROPEAN PATENT APPLICATION

(11) **EP 2 716 618 A1**
(43) Date of publication of application: **09.04.2014**
(21) Application number: 12792840.6
(22) Date of filing: 22.05.2012
(51) Int. Cl.: C04B 37/02, B22F 7/06, B23K 20/00, C04B 35/52, C04B 37/00, C04B 41/85, C04B 41/87, C04B 41/88, C04B 41/90

(54) **JOINT OF METAL MATERIAL AND CERAMIC-CARBON COMPOSITE MATERIAL, METHOD FOR PRODUCING SAME, CARBON MATERIAL JOINT, JOINTING MATERIAL FOR CARBON MATERIAL JOINT, AND METHOD FOR PRODUCING CARBON MATERIAL JOINT**

(30) Priority: 27.05.2011 JP 2011118581; 27.05.2011 JP 2011118582
(71) Applicant: Toyo Tanso Co., Ltd., Osaka-shi, Osaka 555-0011 (JP)
(72) Inventor: OHKUNI, Tomoyuki, Osaka-shi Osaka 555-0011 (JP); CHEN, Weiwu, Suita-shi Osaka 565-0871 (JP); MIYAMOTO, Yoshinari, Osaka-shi Osaka 555-0011 (JP); TOJO, Tetsuro, Osaka-shi Osaka 555-0011 (JP)
(74) Representative: Ter Meer Steinmeister & Partner
(86) International application number: PCT/JP2012/062983
(87) International publication number: WO 2012/165208

(57) **Abstract**

Provided are a joint of a metal material and a ceramic-carbon composite material which can be used at high temperatures, a method for producing the same, a novel carbon material joint, a jointing material for a carbon material joint, and a method for producing a carbon joint. A joint 6 of a metal material 4 and a ceramic-carbon composite material 1 is a joint of a metal material 4 made of metal and a ceramic-carbon composite material 1. The ceramic-carbon composite material 1 includes a plurality of carbon particles 2 and a ceramic portion 3 made of ceramic. The ceramic portion 3 is formed among the plurality of carbon particles 2. The metal material 4 and the ceramic-carbon composite material 1 are joined through a joining layer 5. The joining layer 5 contains a carbide of the metal and the ceramic.

## Description

### Technical Field

This invention relates to a joint of a metal material and a ceramic-carbon composite material, a method for producing the same, a carbon material joint, a jointing material for a carbon material joint, and a method for producing a carbon material joint.

### Background Art

In recent years, there has been an increasing demand for a joint of a metal material and a carbon material, which combines characteristics as the metal material and characteristics as the carbon material. However, generally, it is difficult to join a metal material and a carbon material. Currently, the only proposed method for joining a metal material and a carbon material is the joining method using a brazing filler metal, as disclosed, for example, in Patent Literature 1.

Meanwhile, graphite and ceramics are both high-melting-point materials. Therefore, it is difficult to join a member made of graphite and a member made of graphite or ceramic by fusion welding. In addition, graphite and ceramics are both brittle materials. Therefore, it is difficult to join a member made of graphite and a member made of graphite or ceramic by pressure welding. Hence, the joining of a member made of graphite and a member made of graphite or ceramic is generally implemented by a mechanical method using screws or the like or a method using a brazing filler metal, an adhesive or the like.

For example, Patent Literature 2 discloses a method for bonding graphite materials using a phenol-formaldehyde resin.

Patent Literature 3 discloses bonding graphite materials using a carbon-based adhesive, such as phenol resin.

### Citation List

### Patent Literature

Patent Literature 1: JP-A-2000-313677
Patent Literature 2: JP-A-H06-345553
Patent Literature 3: JP-A-2002-321987

### Summary of Invention

### Technical Problem

In the case of joining a metal material and a carbon material using a brazing filler metal as described in Patent Literature 1, a jointing material cannot be obtained which can be used at higher temperatures than the melting point of the brazing filler metal.

Meanwhile, there is a need for a further powerful method for joining a member made of a carbon material and a member made of carbon, ceramic or metal.

A first object of the present invention is to provide a joint of a metal material and a ceramic-carbon composite material which can be used at high temperatures; and a method for producing the same. A second object of the present invention is to provide a novel carbon material joint, a jointing material for a carbon material joint, and a method for producing a carbon material joint.

### Solution to Problem

A joint of a metal material and a ceramic-carbon composite material of the present invention is a joint of a metal material made of metal and a ceramic-carbon composite material. The ceramic-carbon composite material includes a plurality of carbon particles and a ceramic portion made of ceramic. The ceramic portion is formed among the plurality of carbon particles. The metal material and the ceramic-carbon composite material are joined through a joining layer. The joining layer contains a carbide of the metal and the ceramic.

The term "metal" used in the present invention encompasses metal alloys as well.

In the joint of a metal material and a ceramic-carbon composite material of the present invention, the ceramic portion preferably has a continuous structure.

In the joint of a metal material and a ceramic-carbon composite material of the present invention, the ceramic is preferably made of at least one of aluminum nitride and silicon carbide.

In the joint of a metal material and a ceramic-carbon composite material of the present invention, the metal is preferably made of at least one of W and Mo.

In the joint of a metal material and a ceramic-carbon composite material of the present invention, if the ceramic contains silicon carbide, the joining layer may contain the metal and silicon (Si).

In a method for producing a joint of a metal material and a ceramic-carbon composite material of the present invention, a ceramic-carbon composite material is prepared which includes a plurality of carbon particles and a ceramic portion formed among the plurality of carbon particles and made of ceramic. The ceramic-carbon composite material and a metal material are fired in contact with each other.

In the method for producing a joint of a metal material and a ceramic-carbon composite material of the present invention, the ceramic portion preferably has a continuous three-dimensional network.

In the method for producing a joint of a metal material and a ceramic-carbon composite material of the present invention, the ceramic-carbon composite material preferably contains a sintering aid.

In the method for producing a joint of a metal material and a ceramic-carbon composite material of the present invention, the metal material is preferably in powder form.

A carbon material joint of the present invention includes a first member, a second member, and a ceramic-graphite composite material. The first member is made of a carbon material. The second member is made of carbon, ceramic or metal. The ceramic-graphite composite material joins the first member and the second member. The ceramic-graphite composite material includes a plurality of carbon particles and a ceramic portion. The ceramic portion is formed among the plurality of carbon particles.

The term "carbon material joint" used in the present invention means a joint which includes a plurality of members joined to each other and in which at least one of the plurality of members is a carbon material.

Furthermore, the term "metal" used in the present invention encompasses metal alloys as well.

In the carbon material joint of the present invention, the ceramic portion of the ceramic-graphite composite material preferably has a continuous structure.

In the carbon material joint of the present invention, the ceramic portion is preferably made of at least one selected from the group consisting of aluminum nitride, aluminum oxide, silicon carbide, silicon nitride, boron carbide, tantalum carbide, niobium carbide, zirconium carbide, zinc oxide, silicon oxide, and zirconium oxide.

A first method for producing a carbon material joint of the present invention is a method for producing a carbon material joint including: a first member made of a carbon material; and a second member made of carbon, ceramic or metal and joined to the first member. The first method for producing a carbon material joint of the present invention includes: a laminate producing step of producing a laminate by placing, between the first member and the second member, carbon particles having ceramic attached to surfaces thereof; and a firing step of firing the laminate.

In the laminate producing step in the first method for producing a carbon material joint of the present invention, the carbon particles having ceramic particles attached to the surfaces thereof may be placed between the first member and the second member.

In the first method for producing a carbon material joint of the present invention, the ceramic particles used are preferably ceramic particles made of at least one selected from the group consisting of aluminum nitride, aluminum oxide, silicon carbide, silicon nitride, boron carbide, tantalum carbide, niobium carbide, zirconium carbide, zinc oxide, silicon oxide, and zirconium oxide.

In the laminate producing step in the first method for producing a carbon material joint of the present invention, a mixture of the carbon particles having the ceramic attached to the surfaces thereof and a resin may be placed between the first member and the second member. In this case, a thermoplastic resin is preferably used as the resin.

In the laminate producing step in the first method for producing a carbon material joint of the present invention, a ceramic-carbon composite layer may be placed between the first member and the second member, the ceramic-carbon composite layer including a plurality of carbon particles and a ceramic portion covering and connecting the plurality of carbon particles.

A jointing material for a carbon material joint of the present invention is a jointing material for use in joining a carbon material and a member made of carbon, ceramic or metal. The jointing material for a carbon material joint of the present invention contains a plurality of carbon particles having ceramic attached to surfaces thereof.

In the jointing material for a carbon material joint of the present invention, ceramic particles may be attached to the surfaces of the carbon particles.

The jointing material for a carbon material joint of the present invention preferably contains a resin. The resin is preferably a thermoplastic resin.

In the jointing material for a carbon material joint of the present invention, the ceramic attached to the surfaces of the carbon particles may cover and connect the plurality of carbon particles.

The jointing material for a carbon material joint of the present invention may be in sheet form.

A second method for producing a carbon material joint of the present invention is a method for producing a carbon material joint including: a first member made of a carbon material; and a second member made of carbon, ceramic or metal and joined to the first member. The second method for producing a carbon material joint of the present invention includes: the step of firing a laminate produced by placing a mixture of the second member and a resin on the first member.

In the second method for producing a carbon joint of the present invention, the second member may be in powder form. Advantageous Effects of Invention

The present invention can provide a joint of a metal material and a ceramic-carbon composite material which can be used at high temperatures; and a method for producing the same. Furthermore, the present invention can provide a novel carbon material joint, a jointing material for a carbon material joint, and a method for producing a carbon joint.

### Brief Description of Drawings

[Fig. 1] Fig. 1 is a schematic cross-sectional view of a joint of a metal material and a ceramic-carbon composite material in a first embodiment.

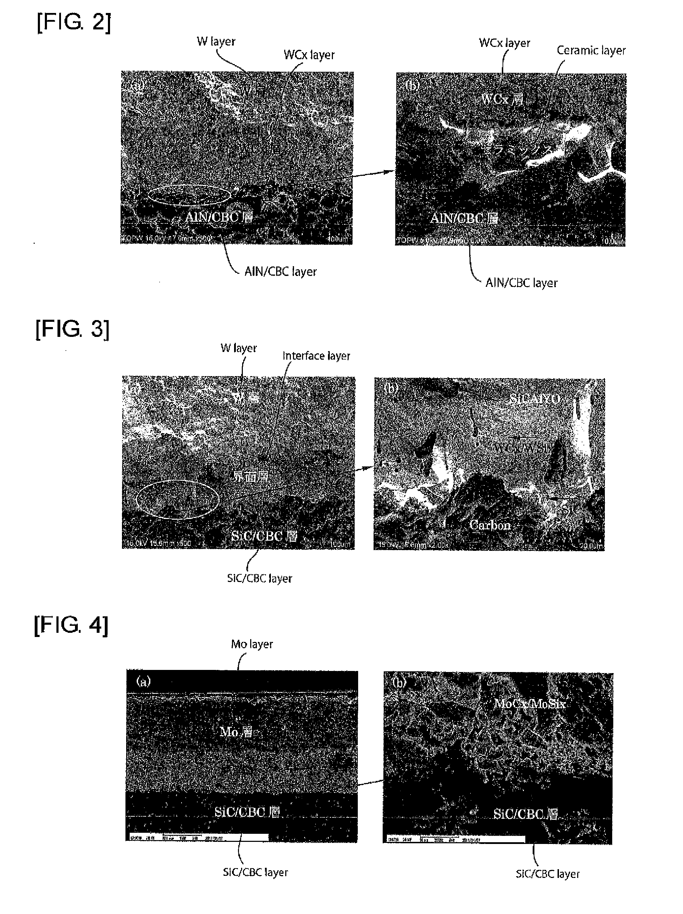

[Fig. 2] Fig. 2 is scanning electron micrographs of a joint surface of a joint obtained in Example 1 (in which the left and right ones are shown at 500-fold and 5000-fold magnification, respectively).
[Fig. 3] Fig. 3 is scanning electron micrographs of a j oint surface of a joint obtained in Example 4 (in which the left and right ones are shown at 500-fold and 2000-fold magnification, respectively).
[Fig. 4] Fig. 4 is scanning electron micrographs of a joint surface of a joint obtained in Example 5 (in which the left and right ones are shown at 100-fold and 2000-fold magnification, respectively).
[Fig. 5] Fig. 5 is scanning electron micrographs of a joint surface of a joint obtained in Example 6 (in which the left and right ones are shown at 500-fold and 2000-fold magnification, respectively).
[Fig. 6] Fig. 6 is a schematic cross-sectional view of a carbon material joint according to a second embodiment.
[Fig. 7] Fig. 7 is a schematic cross-sectional view of a laminate in a third embodiment.
[Fig. 8] Fig. 8 is a schematic cross-sectional view of a laminate in a third embodiment.
[Fig. 9] Fig. 9 is a schematic cross-sectional view of a carbon material joint produced in a third embodiment. Description of Embodiments

A description will be given below of examples of preferred embodiments for working of the present invention. However, the following embodiments are simply illustrative. The present invention is not at all limited by the following embodiments.

The drawings to which the embodiments and the like refer are schematically illustrated, and the dimensional ratios and the like of objects illustrated in the drawings may be different from those of the actual objects. The dimensional ratios and the like of specific objects should be determined in consideration of the following descriptions.

### (First Embodiment)

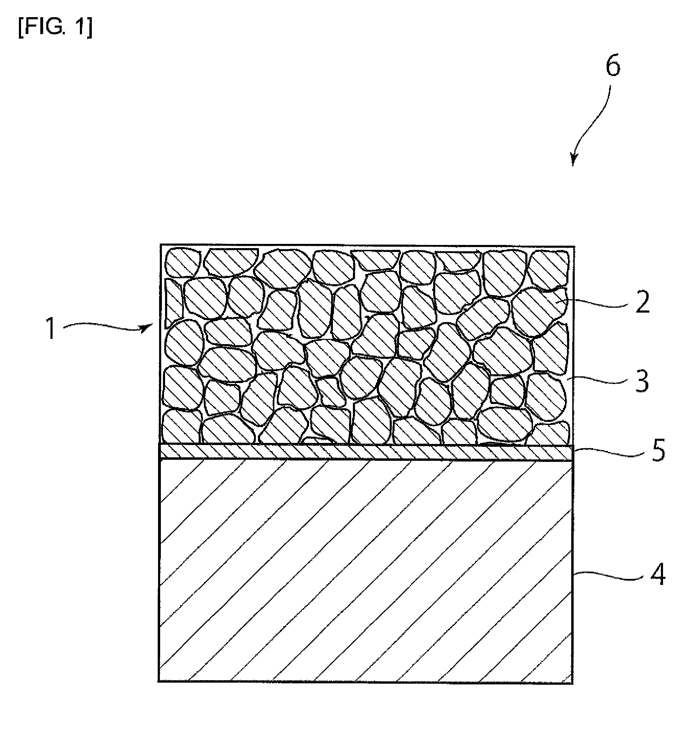

Fig. 1 is a schematic cross-sectional view of a joint of a metal material and a ceramic-carbon composite material in a first embodiment.

As shown in Fig. 1, a joint 6 of a metal material and a ceramic-carbon composite material is a j oint of a metal material 4 made of metal and a ceramic-carbon composite material 1.

### (Metal Material 4)

No particular limitation is placed on the metal constituting the metal material 4. Specific examples of the metal include, for example, W, Mo, Ti, Si, Al, Cr, Cu, Sn, and their alloys. The metal material 4 is preferably made of at least one of W and Mo. In other words, the metal material 4 is preferably made of W, Mo or an alloy of W and Mo.

The metal material 4 may have any form or shape. The form or shape of the metal material 4 may be, for example, particulate form, sheet form, columnar shape or fibrous form. The metal material 4 is preferably in powder form.

### (Ceramic-Carbon Composite Material 1)

The ceramic-carbon composite material 1 includes a plurality of carbon particles 2 and a ceramic portion 3 made of ceramic.

The preferred carbon particles 2 to be used are, for example, those of natural graphite made of vein graphite, flake graphite, amorphous graphite or the like; artificial graphite made from coke, mesophase spherule or the like; or carbonaceous material. The particle size of the carbon particles 2 is preferably about 50 nm to about 500 µm, more preferably about 1 µm to about 250 µm, and still more preferably about 5 µm to about 100 µm. If the particle size of the carbon particles 2 is too small, the carbon particles 2 will be likely to agglomerate. If the carbon particles 2 agglomerate too much, the resultant ceramic-carbon composite material 1 may not be able to acquire carbon characteristics. On the other hand, if the particle size of the carbon particles 2 is too large, the ceramic-carbon composite material 1 obtained by firing may be reduced in strength. The plurality of carbon particles 2 may include a single type of carbon particles 2 or a plurality of types of carbon particles 2.

The ceramic portion 3 is formed among the plurality of carbon particles 2. The ceramic portion 3 preferably has a continuous structure. In other words, the plurality of carbon particles 2 are preferably integrated by the ceramic portion 3 having a continuous structure. The ceramic portion 3 preferably has a three-dimensional network. In the ceramic-carbon composite material 1, the carbon particles 2 are preferably dispersed in the ceramic portion 3. The carbon particles 2 may be dispersed in agglomerates in the ceramic portion 3. The ceramic portion 3 may be composed of a single continuous ceramic portion or a plurality of isolated ceramic portions.

The volume ratio between the carbon particles 2 and the ceramic portion 3 in the ceramic-carbon composite material 1 (the volume of the carbon particles 2 to the volume of the ceramic portion 3) is preferably 95:5 to 50: 50 and more preferably 90:10 to 70:30.

Examples of the ceramic constituting the ceramic portion 3 include, for example, aluminum nitrides, such as AlN; aluminum oxides, such as Al₂O₃; silicon carbides, such as SiC; silicon nitrides, such as Si₃N₄; boron carbides, such as B₄C; tantalum carbides, such as TaC; niobium carbides, such as NbC; zirconium carbides, such as ZrC; zinc oxides, such as ZnO; silicon oxides, such as SiO₂; and zirconium oxides, such as ZrO₂. Among them aluminum nitrides, such as AlN, and silicon carbides, such as SiC, are preferably used for the ceramic portion 3. The composition of the ceramic may be homogeneous or heterogeneous.

The thickness of the ceramic portion 3 is preferably about 100 nm to about 10 µm.

The ceramic-carbon composite material 1 can be produced, for example, by firing the carbon particles 2 having ceramic attached to their surfaces. The carbon particles 2 having ceramic attached to their surfaces can be produced, for example, by a gas phase method, a liquid phase method, a mechanical mixing method of mixing the ceramic and the carbon particles 2 using a mixer or the like, a slurry method, or a combined method of them. Specific examples of the gas phase method include the chemical vapor deposition method (CVD method) and the conversion method (CVR method). A specific example of the liquid phase method is the chemical precipitation method. Specific examples of the slurry method include, for example, gel-casting, slip-casting, and tape-casting.

The firing temperature and firing time of the carbon particles 2 having ceramic attached to their surfaces, the type of firing atmosphere, the pressure in the firing atmosphere, and so on can be appropriately selected depending upon the types, shapes, sizes, and so on of the materials used. The firing temperature can be, for example, about 1700°C to about 2100°C. The firing time can be, for example, about five minutes to about two hours. The type of firing atmosphere can be, for example, an inert gas atmosphere, such as nitrogen or argon. The pressure in the firing atmosphere can be, for example, about 0.01 MPa to about 10 MPa.

The ceramic-carbon composite material 1 preferably contains a sintering aid. Examples of the sintering aid include yttrium oxides, such as Y₂O₃; aluminum oxides, such as Al₂O₃; calcium oxides, such as CaO; and silicon oxides, such as SiO₂.

### (Joining Layer 5)

A joining layer 5 is formed between the metal material 4 and the ceramic-carbon composite material 1. The metal material 4 and the ceramic-carbon composite material 1 are joined through the joining layer 5. The joining layer 5 contains metal carbide and ceramic.

The metal carbide contained in the joining layer 5 is formed, as will be described later, so that in a joining step the metal supplied from the metal material 4 combines with carbon. In other words, the metal carbide is derived from the metal material 4. Therefore, the metal carbide is a carbide of metal of the same type as the metal constituting the metal material 4. Thus, the type of the metal carbide to be contained in the joining layer 5 depends upon the metal constituting the metal material 4. For example, if the metal material 4 is made of at least one of W and Mo, the metal carbide contained in the joining layer 5 is at least one of tungsten carbide or molybdenum carbide.

The ceramic contained in the joining layer 5 is derived from the ceramic portion 3 as will be described later. Therefore, the ceramic contained in the joining layer 5 is of the same type as the ceramic constituting the ceramic portion 3. For example, if the ceramic portion 3 is made of at least one of aluminum nitride and silicon carbide, the joining layer 5 also contains at least one of aluminum nitride and silicon carbide. In the joining layer 5, the metal and the ceramic may exist separately from each other or in combined form.

The thickness of the joining layer 5 is generally about 1 µm to 200 µm.

As described above, in the joint 6 of this embodiment, the joining layer 5 contains the carbide of the metal and the ceramic. Thus, the joining layer 5 has excellent affinity for the metal material 4 and the ceramic-carbon composite material 1. Therefore, the adhesion strength between the joining layer 5 and the metal material 4 is high and the adhesion strength between the joining layer 5 and the ceramic-carbon composite material 1 is high. As a result, the adhesion strength between the metal material 4 and the ceramic-carbon composite material 1 also becomes high. Hence, in the joint 6, the metal material 4 and the ceramic-carbon composite material 1 are joined with high joint strength.

In the joint 6, no brazing filler metal is used for joining the metal material 4 and the ceramic-carbon composite material 1. Therefore, the joint 6 can be used at higher temperatures than the melting points of brazing filler metals.

As seen from the above, the joint 6 of this embodiment can be suitably used as a high-performance targets of rotating X-ray anodes, heat dissipating member, heat-proof member, radiation-proof member, plasma damage-proof member or the like.

### (Method for Producing Joint 6)

A description will be given below of an example of a method for producing the joint 6 of the metal material 4 and the ceramic-carbon composite material 1.

A laminate obtained by bringing the ceramic-carbon composite material 1 into contact with the metal material 4 is fired. In this firing step, the metal contained in a surface layer of the metal material 4 adjoining the ceramic-carbon composite material 1 combines with carbon supplied from the carbon particles 2 in the ceramic-carbon composite material 1 to form a metal carbide. Thus, a joining layer 5 containing the metal carbide and the ceramic of the ceramic portion 3 is formed. As a result, a joint 6 can be obtained in which the metal material 4 and the ceramic-carbon composite material 1 are joined.

For example, if the metal material 4 is in powder form, the joint 6 can be produced by placing the metal material 4 in powder form on the ceramic-carbon composite material 1 and firing them in this state. For example, if the metal material 4 is in sheet form, the joint 6 can be produced by firing the ceramic-carbon composite material 1 and the metal material 4 in a laminated state.

W and Mo are metals likely to form a carbide. Therefore, with the use of the metal material 4 made of at least one of W and Mo, a metal carbide is likely to be formed. This facilitates joining the metal material 4 and the ceramic-carbon composite material 1.

The firing temperature and firing time of the ceramic-carbon composite material 1 and the metal material 4, the type of firing atmosphere, the pressure in the firing atmosphere, and so on can be appropriately selected depending upon the types, shapes, sizes, and so on of the materials used. The firing temperature can be, for example, about 600°C to about 1800°C. The firing time can be, for example, about two minutes to about two hours. The type of firing atmosphere can be, for example, an inert gas atmosphere, such as nitrogen or argon. The pressure in the firing atmosphere can be, for example, about 0 MPa to about 10 MPa.

With the method for producing the joint 6 of this embodiment, the metal material 4 and the ceramic-carbon composite material 1 can be joined without the use of any brazing filler metal and any adhesive.

In addition, it is possible to join even the metal material 4 and the ceramic-carbon composite material 1 which have such a shape that they could not be joined by mechanical joining using bolts or the like.

Hereinafter, the present invention will be described in more detail with reference to specific examples. The present invention is not at all limited by the following examples. Modifications and variations of the present invention may be appropriately made without changing the gist of the present invention.

### (Experimental Example 1)

A ceramic-carbon composite material having substantially the same structure as the ceramic-carbon composite material 1 was produced in the following manner.

As the carbon particles 2, graphite (mesophase spherules manufactured by Toyo Tanso Co., Ltd.) was used. As the ceramic, aluminum nitride powder (Type H manufactured by Tokuyama Corporation) was used.

A mixed powder of graphite (10 g), aluminum nitride (3.54 g), and Y₂O₃ (0.19 g) as a sintering aid and a binder solution (2.49 g) containing acrylamide (8 g) and N,N'-methylenebisacrylamide (1 g) dissolved in isopropanol (45 g) were mixed by the gel-casting method and the mixture was cast in a plastic mold. The volume ratio between graphite and ceramic in the mixture was 80: 20. The obtained mixture was dried at 80°C for 12 hours under ordinary pressure to obtain a dry product. Next, the dry product was heated at 700°C for an hour under vacuum to remove acrylamide as the binder. Furthermore, using the spark plasma sintering method, the dry product was sintered by passage of pulse current at 1900°C for five minutes under vacuum condition with the application of a pressure of 30 MPa. As a result, an aluminum nitride-graphite composite material was obtained as a ceramic-carbon composite material.

The obtained aluminum nitride-graphite composite material was measured in terms of bulk density, bending strength, and thermal conductivity in the following manners. The results are shown in Table 1 below.

### [Bulk Density]

The bulk density was measured by the Archimedes' method. Specifically, the bulk density was measured in accordance with JIS A 1509-3.

### [Bending Strength]

The bending strength was measured by the three-point bending test. Specifically, the bending strength was measured in accordance with JIS A 1509-4.

### [Thermal Conductivity]

The thermal conductivity was measured by the laser flash method. Specifically, the thermal conductivity was measured in accordance with JIS A 1650-3.

### (Experimental Example 2)

A silicon carbide-graphite composite material was obtained in the same manner as in Experimental Example 1 except that silicon carbide (Type E10 manufactured by Ube Industries, Ltd.) was used instead of aluminum nitride. The volume ratio between graphite and ceramic was 70:30.

The obtained silicon carbide-graphite composite material was measured in terms of bulk density, bending strength, and thermal conductivity in the manners described in Experimental Example 1. The results are shown in Table 1 below.

### (Experimental Example 3)

An aluminum nitride-graphite composite material was obtained in the same manner as above except that in Experimental Example 1 the sintering aid was not used.

The obtained aluminum nitride-graphite composite material was measured in terms of bulk density and bending strength in the manners described in Experimental Example 1. The results are shown in Table 1 below. The thermal conductivity was not measured.

### (Comparative Experimental Example 1)

A mixed powder of graphite (mesophase spherules manufactured by Toyo Tanso Co., Ltd., 10 g), aluminum nitride (3.54 g), and a sintering aid (Y₂O₃, 0.19 g) and ethanol (15 g) were mixed with a ball mill. The obtained mixture was dried at 80°C for 12 hours under ordinary pressure to obtain a dry powder. Next, using the spark plasma sintering method, the obtained powder was sintered by passage of pulse current at 1900°C for five minutes under vacuum condition with the application of a pressure of 30 MPa. As a result, a sintered aluminum nitride-graphite composite body was obtained.

The obtained sintered composite body was measured in terms of bulk density, bending strength, and thermal conductivity in the manners described in Experimental Example 1. The results are shown in Table 1 below.

**[Table 1]**

| | Ceramic-Graphite Composite Material | Bulk Density (g/cm³) | Bending Strength (MPa) | Thermal Conductivity (W/mK) |
|---|---|---|---|---|
| Experimental Example 1 | aluminum nitride-graphite | 2.36 | 100 | 170 |
| Experimental Example 2 | silicon carbide-graphite | 2.42 | 150 | 138 |
| Experimental Example 3 | aluminum nitride-graphite | 1.98 | 25 | - |
| Comparative Experimental Example 1 | sintered aluminum nitride-graphite composite body | 2.0 | 23 | 32 |

### (Example 1)

An end surface of the aluminum nitride-graphite composite material (5 mm thick and 25 mm diameter column) produced in Experimental Example 1 was polished with sandpaper and tungsten powder (with a particle size of approximately 0.6 µm, 4.5 g) as the metal material 4 was placed with a thickness of 0.3 mm on the end surface of the aluminum nitride-graphite composite material, resulting in a laminate. Next, the laminate was sintered by passage of pulse current at 1700°C for five minutes under vacuum condition with the application of a pressure of 30 MPa. As a result, a joint 6 of tungsten and the aluminum nitride-graphite composite material was obtained. The obtained joint 6 was processed and ground as described below to form a test piece and the resultant test piece was measured in terms of bending strength in the following manner. The results are shown in Table 2 below.

### [Production of Test Piece]

The test piece was obtained by processing the joint into an approximately 3 mm wide, 2 to 6 mm thick, and 20 mm long cuboid and grinding the cuboid on an 80 µm thick lap.

### [Bending Strength]

The bending strength was measured by the three-point bending test. Specifically, the bending strength was measured in accordance with JIS A 1509-4.

### (Example 2)

A joint 6 of tungsten and an aluminum nitride-graphite composite material was obtained in the same manner as in Example 1 except that an aluminum nitride-graphite composite material (5 mm thick and 25 mm diameter column) was used as the ceramic-carbon composite material and tungsten powder (with a particle size of approximately 0.6 µm, 5 g) was placed as the metal material 4 to have a thickness of 0.5 mm. The obtained joint 6 was processed, ground, and then measured in terms of bending strength in the same manners as in Example 1. The results are shown in Table 2 below.

### (Example 3)

A joint 6 of tungsten and an aluminum nitride-graphite composite material was obtained in the same manner as in Example 2. The obtained joint 6 was subjected to a thermal cycling process. The method of the thermal cycling process was carried out by repeating a cycle of heating from room temperature to 400°C and cooling vice versa in vacuum 10 times. The obtained joint 6 was processed, ground, and then measured in terms of bending strength in the same manners as in Example 1. The results are shown in Table 2 below.

### (Example 4)

A joint 6 of tungsten and a ceramic-carbon composite material was obtained in the same manner as in Example 2 except that the silicon carbide-graphite composite material (5 mm thick and 25 mm diameter) obtained in Experimental Example 2 was used as the ceramic-carbon composite material. The obtained joint 6 was processed, ground, and then measured in terms of bending strength in the same manners as in Example 1. The results are shown in Table 2 below.

### (Example 5)

A joint 6 of molybdenum and a ceramic-graphite composite material was obtained in the same manner as in Example 1 except that a silicon carbide-graphite composite material (6 mm thick and 25 mm diameter) obtained by the same method as in Experimental Example 2 was used as the ceramic-carbon composite material 1 and molybdenum (Mo) powder (with a particle size of approximately 0.7 mm, 3.5 g) was placed as the metal material 4 to have a thickness of 0.5 mm. The obtained joint 6 was processed, ground, and then measured in terms of bending strength in the same manners as in Example 1. The results are shown in Table 2 below.

### (Example 6)

A joint 6 of tungsten and an aluminum nitride-graphite composite material was obtained in the same manner as in Example 1 except that an aluminum nitride-graphite composite material (5 mm thick and 25 mm diameter column) obtained in Experimental Example 3 was used as the ceramic-carbon composite material 1. The obtained joint 6 was processed, ground, and then measured in terms of bending strength in the same manners as in Example 1. The results are shown in Table 2 below.

### (Comparative Example 1)

Graphite IG-88 manufactured by Toyo Tanso Co., Ltd. was polished with sandpaper and 5 g of tungsten powder (with a particle size of approximately 0.6 µm, 5 g) was then placed with a thickness of 0.5 mm on top of the graphite. Next, the workpiece was sintered by passage of pulse current at 1700°C for five minutes under vacuum condition with the application of a pressure of 30 MPa. As a result, the graphite and the tungsten powder could not be joined. The results are shown in Table 2 below.

**[Table 2]**

| | Ceramic-Graphite Composite Material | Metal | Thickness of Ceramic-Graphite Composite Material (mm) | Thickness of the metal material 4 (mm) | Bending Strength |
|---|---|---|---|---|---|
| Ex. 1 | aluminum nitride-graphite | W | 2.2 | 0.3 | 172 |
| Ex. 2 | aluminum nitride-graphite | w | 2.8 | 0.5 | 227 |
| Ex. 3 | aluminum nitride-graphite | W | 2.8 | 0.5 | 260 |
| Ex. 4 | silicon carbide-graphite | W | 3.3 | 0.5 | 338 |
| Ex. 5 | silicon carbide-graphite | Mo | 5.1 | 0.5 | 210 |
| Ex. 6 | aluminum nitride-graphite | W | 2.2 | 0.3 | 120 |
| Comp. Ex. 1 | graphite | W | joint not obtained | | |

Note that the thicknesses of the ceramic-graphite composite materials in Examples 1 to 6 are those of the test pieces obtained after the joints were processed and ground in the above manner.

### (Second Embodiment)

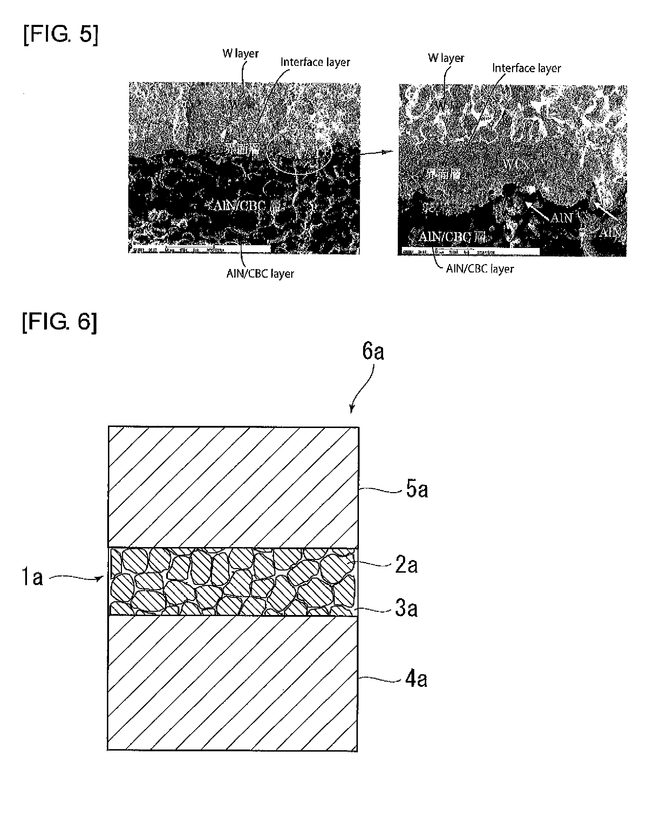

Fig. 6 is a schematic cross-sectional view of a carbon material joint according to a second embodiment. As shown in Fig. 6, the carbon material joint 6a includes a first member 4a and a second member 5a. The carbon material joint 6a is a joint of the first member 4a and the second member 5a.

### (First Member 4a)

The first member 4a is made of a carbon material. The carbon material is a material consisting mainly of carbon. The carbon material may contain components other than carbon. Specific examples of the carbon material include pre-graphitized, or carbonaceous materials; isotropic graphite materials; anisotropic graphite materials, including extruded materials and molded materials; and carbon fiber composite materials. The coefficient of thermal expansion of the carbon material is preferably in a range of 0.5x10⁻⁶/K to 9.0x10⁻⁶/K.

### (Second Member 5a)

The second member 5a is made of carbon, ceramic or metal.

Examples of preferred carbon materials for use as a constituent material of the second member 5a are the same as those for the first member 4a.

Examples of preferred ceramics for use as a constituent material of the second member 5a include, for example, aluminum nitride, aluminum oxide, silicon carbide, silicon nitride, boron carbide, tantalum carbide, niobium carbide, zirconium carbide, zinc oxide, silicon oxide, and zirconium oxide. The composition of the ceramic in the second member 5a may be homogeneous or heterogeneous. For example, the composition of the ceramic constituting the second member 5a near the interface adjoining a ceramic-graphite composite material 1a may be a composition close to that of a ceramic portion of the ceramic-graphite composite material 1a.

Examples of preferred metals for use as a constituent material of the second member 5a include, for example, Al, Cu, Ag, Ni, Fe, Cr, W, Ti, Mo, Au, and Pt.

In Fig. 6, the second member 5a is schematically illustrated in the shape of a cuboid. However, no particular limitation is placed on the shape and form of the second member 5a. The second member 5a may be in the shape of a block as described in Fig. 6 or in other shapes and forms, such as, particulate form, columnar shape, and fibrous form. If the second member 5a is in particulate form, the particle size of the second member 5a can be, for example, about 50 nm to about 500 µm.

### (Ceramic-Graphite Composite Material 1a)

The ceramic-graphite composite material 1a is placed between the first member 4a and the second member 5a. This ceramic-graphite composite material 1a joins the first member 4a and the second member 5a.

The ceramic-graphite composite material 1a includes a plurality of carbon particles 2a and a ceramic portion 3a.

Examples of the carbon particles 2a include, for example, fired organic compounds (synthetic and natural organic compounds), fired mesocarbon spherules, fired resin products, petroleum cokes, coal cokes, and graphite particles of materials having a graphitic structure, such as natural graphite and artificial graphite. Preferred among these examples are graphite particles and more preferred graphite particles to be used include, for example, spherulite graphite and spherical natural graphite. The particle size of the carbon particles is preferably about 50 nm to about 500 µm, more preferably about 1 µm to about 250 µm, and still more preferably about 5 µm to about 100 µm. If the particle size of the carbon particles 2a is too small, the carbon particles 2a will be likely to agglomerate. If the carbon particles 2a agglomerate too much, the strength will decrease. On the other hand, if the particle size of the carbon particles 2a is too large, voids may become large and also in this case the strength will decrease because of stress concentration. The plurality of carbon particles 2a may include a single type of carbon particles or a plurality of types of carbon particles.

The ceramic portion 3a lies among the plurality of carbon particles 2a. The ceramic portion 3a has a continuous structure. Therefore, the plurality of carbon particles 2a are integrated by the ceramic portion 3a. The ceramic portion 3a preferably has a three-dimensional network. In the ceramic-graphite composite material 1a, the carbon particles 2a are preferably dispersed in the ceramic portion 3a. The carbon particles 2a may be dispersed in agglomerates in the ceramic portion 3a.

The ceramic portion 3a may be composed of a single continuous ceramic portion or a plurality of isolated ceramic portions.

No particular limitation is placed on the ceramic constituting the ceramic portion 3a. Specific examples of the ceramic constituting the ceramic portion include, for example, aluminum nitride, aluminum oxide, silicon carbide, silicon nitride, boron carbide, tantalum carbide, niobium carbide, zirconium carbide, zinc oxide, silicon oxide, and zirconium oxide. The ceramic portion 3a may be made of a single type of ceramic or a plurality of types of ceramics. If the ceramic portion 3a is made of a plurality of types of ceramics, the composition thereof may be homogeneous or heterogeneous.

As thus far described, the ceramic-graphite composite material 1a in the carbon material joint 6a includes the plurality of carbon particles 2a and the ceramic portion 3a. Thus, the ceramic-graphite composite material 1a has high affinity for carbon, ceramics, and metals. Therefore, the adhesion strength between the ceramic-graphite composite material 1a and the first member 4a made of a carbon material is high and the adhesion strength between the ceramic-graphite composite material 1a and the second member 5a made of carbon, ceramic or metal is high. As a result, the adhesion strength between the first member 4a and the second member 5a also becomes high. Hence, in the carbon material joint 6a, the first member 4a made of a carbon material and the second member 5a made of carbon, ceramic or metal are joined with high joint strength.

From the viewpoint of achieving higher joint strength between the first member 4a and the second member 5a, in the case of the second member 5a made of ceramic, the composition of the second member 5a near the interface adjoining the ceramic-graphite composite material 1a is preferably close to that of the ceramic portion 3a of the ceramic-graphite composite material 1a. Furthermore, the composition of the second member 5a near the interface adjoining the ceramic-graphite composite material 1a and the composition of the ceramic portion 3a of the ceramic-graphite composite material 1a preferably have solid solubility in each other or are preferably chemically reactive to each other.

Since the ceramic-graphite composite material 1a includes the carbon particles 2a and the ceramic portion 3a, the coefficient of thermal expansion of the ceramic-graphite composite material 1a can be brought close to the coefficient of thermal expansion of the first member 4a or the second member 5a by controlling the constituent materials or the like of the carbon particles 2a or the ceramic portion 3a. Thus, the delamination between the first member 4a and the ceramic-graphite composite material 1a and the delamination between the second member 5a and the ceramic-graphite composite material 1a can be effectively reduced.

Furthermore, since the ceramic-graphite composite material 1a includes the carbon particles 2a and the ceramic portion 3a, the thermal conductivity of the ceramic-graphite composite material 1a can be controlled by controlling the constituent materials or the like of the carbon particles 2a or the ceramic portion 3a or controlling the ratio between the carbon particles 2a and the ceramic portion 3a.

Since the carbon material joint 6a of this embodiment has excellent characteristics as described above, it can be favorably used as a heat dissipating substrate, a structural member or the like.

A description will be given below of an example of a method for producing the carbon material joint 6a.

### (Laminate Producing Step)

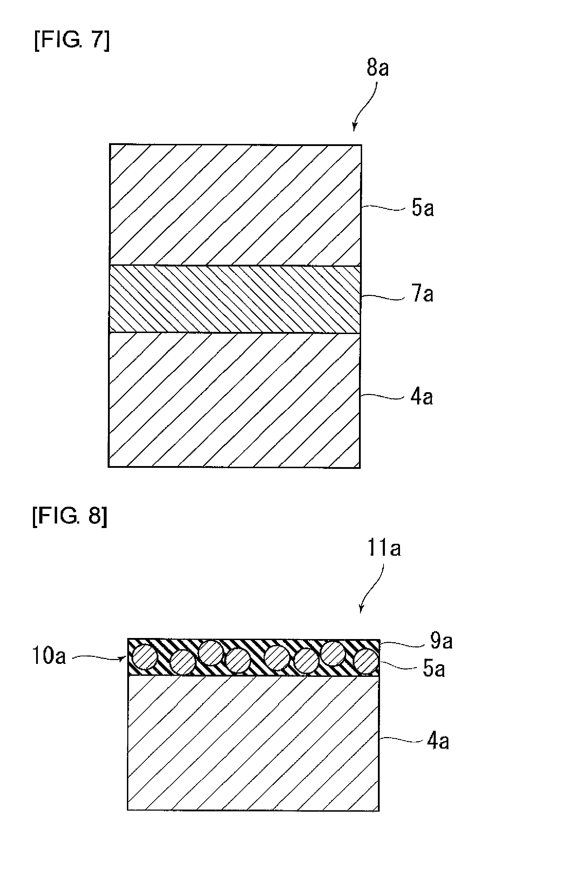

First, a laminate producing step is performed. In the laminate producing step, a jointing material 7a for a carbon material joint, containing a plurality of carbon particles 2a having ceramic attached to their surfaces (not shown in Fig. 7), is placed between the first member 4a and the second member 5a to produce a laminate 8a shown in Fig. 7.

In this case, the ceramic attached to the surfaces of the carbon particles 2a is for use to constitute the ceramic portion 3a. Therefore, the type of the ceramic attached to the surfaces of the carbon particles 2a can be appropriately selected depending upon the type of the ceramic portion 3a to be formed. The composition of the ceramic contained in the jointing material 7a may be homogeneous or heterogeneous. The composition of the ceramic contained in the jointing material 7a and the composition of the ceramic in the second member 5a may be equal or not.

No particular limitation is placed on the form of the ceramic. For example, particles of the ceramic may be attached to the surfaces of the carbon particles 2a. In this case, the particle size of the ceramic particles is preferably in a range of 1/100 to 1/5 of the particle size of the carbon particles. Thus, substantially the entire surface of each carbon particle can be covered with the ceramic particles. The particle size of the ceramic particles is more preferably in a range of 1/50 to 1/10 of that of the carbon particles and still more preferably in a range of 1/40 to 1/20 of the same.

Alternatively, a layer of the ceramic having a thickness of about 100 nm to about 20 µm may be formed on the surface of each of the carbon particles 2a. In this case, the plurality of carbon particles 2a each having a ceramic layer formed on the surface may be discrete particles or may be integrated by the ceramic layer. Therefore, the plurality of carbon particles 2a each coated with the ceramic layer may be placed between the first member 4a and the second member 5a or the jointing material 7a having substantially the same form as the ceramic-graphite composite material 1a may be placed between them. In other words, the jointing material 7a can be formed of a ceramic-carbon composite body including the plurality of carbon particles 2a and the ceramic portion 3a covering and connecting the plurality of carbon particles 2a.

The carbon particles having ceramic attached to their surfaces can be produced, for example, by a gas phase method, a liquid phase method, a mechanical mixing method of mixing the ceramic and the carbon particles using a mixer or the like, a slurry method, or a combined method of them. Specific examples of the gas phase method include the chemical vapor deposition method (CVD method) and the chemical vapor reaction method (CVR method). Specific examples of the liquid phase method include, for example, the coprecipitation method and the sol-gel method. Specific examples of the slurry method include, for example, the gel-casting method and the tape-casting method.

The jointing material 7a having substantially the same form as the ceramic-graphite composite material 1a can be produced by firing the carbon particles having ceramic attached to their surfaces, which have been produced by any one of the aforementioned methods.

If the carbon particles having ceramic attached to their surfaces are in powder form, the jointing material 7a is preferably formed of a mixture of the carbon particles and a resin. In this case, the jointing material 7a can be easily handled. In addition, the shape of the jointing material 7a can be freely controlled. For example, the jointing material 7a can be formed in a sheet. Since the jointing material 7a contains a resin, the jointing material 7a can enter pores in the carbon particles. The entry of the jointing material 7a into the pores in the carbon particles can increase the joint strength between the first member 4a and the second member 5a. Usable resins include thermoplastic resins and thermosetting resins. The resin is preferably a thermoplastic resin. Specifically, for example, polyvinyl alcohol, polyvinyl butyral or like resin can be preferably used.

### (Firing Step)

Next, the laminate 8a is fired. Thus, the first member 4a made of a carbon material and the second member 5a made of carbon, ceramic or metal can be suitably joined by the ceramic-graphite composite material 1a without the use of any brazing filler metal or the like. In addition, it is possible to join even the first and second members 4a, 5a which have such a shape that they could not be joined by mechanical joining using bolts or the like.

Furthermore, in the joining method of this embodiment, the first member 4a and the second member 5a can be joined with high joint strength. Furthermore, a carbon material joint 6a can be obtained in which the first member 4a and the second member 5a are less likely to delaminate from each other. Moreover, the thermal conductivity between the first member 4a and the second member 5a can be increased.

The firing temperature and firing time of the laminate, the type of firing atmosphere, the pressure applied to the laminate, and so on can be appropriately selected depending upon the types, shapes, sizes, and so on of the materials used. The firing temperature of the laminate can be, for example, about 1000°C to about 2000°C. The firing time of the laminate can be, for example, about five minutes to about one day. The type of firing atmosphere can be, for example, an inert gas atmosphere, such as nitrogen, argon or helium, or vacuum atmosphere. The pressure applied can be, for example, about 0 MPa to about 40 MPa.

A description will be given below of other exemplary preferred embodiments of the present invention. In the following description, elements having substantially the same functions as those in the second embodiment are referred to by the common references and further explanation thereof will be omitted.

### (Third Embodiment)

Fig. 8 is a schematic cross-sectional view of a laminate in a third embodiment. With reference to Fig. 8, a description is given below of a method for joining a first member 4a and a second member 5a in this embodiment.

In this embodiment, the second member 5a is in particulate form. In this embodiment, a mixture of the second member 5a in particulate form and a resin 9a is placed on the first member 4a, resulting in the formation of a resin layer 10a in which the second member 5a is dispersed in the resin 9a.

The formation of the resin layer 10a can be implemented, for example, by the tape-casting method.

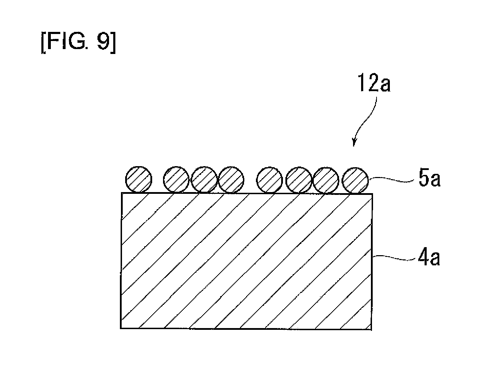

Next, a laminate 11a of the first member 4a and the resin layer 10a is fired. Thus, as shown in Fig. 9, a carbon material joint 12a can be obtained in which the fired second member 5a is joined to the surface of the first member 4a.

In the method for producing the carbon material joint 12a of this embodiment, the first member 4a and the second member 5a can be joined with high joint strength.

The firing conditions, like the second embodiment, can be appropriately selected depending upon the types, shapes, sizes, and so on of the materials used.

Hereinafter, the present invention will be described in more detail with reference to specific examples. The present invention is not at all limited by the following examples. Modifications and variations may be appropriately made therein without changing the gist of the present invention.

### (Example 7)

An isotropic graphite material with a bulk density of 1.8 Mg/m³, a bending strength of 40 MPa, and a coefficient of linear thermal expansion of 4.7×10⁻⁶/K was prepared. This isotropic graphite material was used as the first member 4a.

Next, spherulite graphite with an average particle size of 26 µm and aluminum nitride powder (Grade H manufactured by Tokuyama Corporation, with an average particle size of 0.6 µm and a specific surface area of 2.7 m²/g) were mixed to give a volume ratio (the volume of the spherulite graphite to the volume of the aluminum nitride powder) of 80:20. Added to 13.74 g of the obtained mixture were 0.83 g of 2-hethylhexyl phosphate as a dispersant, 10 g of mixture of 2-butanone and ethanol (volume ratio of 66:34) as a solvent, 2.5 g of polyvinyl butyral as a binder, and 1.15 g of mixture of polyethylene glycol and benzyl butyl phthalate alcohol (mass ratio of 50:50) as a plasticizer to prepare a mixture. The obtained mixture was stirred with a planetary centrifugal mixer to obtain a slurry. The obtained slurry was formed into a sheet by the doctor blade method and dried at room temperature to obtain a 150 µm thick graphite-aluminum nitride tape. This graphite-aluminum nitride tape was used as the jointing material 7a.

Next added to 20 g of aluminum nitride powder (Grade H manufactured by Tokuyama Corporation, with an average particle size of 0.6 µm and a specific surface area of 2.7 m²/g) were 0.26 g of 2-hethylhexyl phosphate as a dispersant, 10.9 g of mixture of 2-butanone and ethanol (volume ratio of 66:34) as a solvent, 2.18 g of polyvinyl butyral as a binder, and 2.97 g of mixture of polyethylene glycol and benzyl butyl phthalate alcohol (mass ratio of 50:50) as a plasticizer to prepare a mixture. The obtained mixture was stirred with a planetary centrifugal mixer to obtain a slurry. The obtained slurry was formed into a sheet by the doctor blade method and dried at room temperature to obtain a 140 µm thick aluminum nitride tape containing aluminum nitride particles dispersed therein. This aluminum nitride tape was used as the second member 5a.

Next, the jointing material 7a formed of the graphite-aluminum nitride tape and the second member 5a formed of the aluminum nitride tape were sequentially placed on the first member 4a formed of the isotropic graphite material to produce a laminate 8a.

Next, using the spark plasma sintering method, the laminate 8a was held at 1900°C for five minutes in vacuum under a pressure of 30 MPa. As a result, a carbon material joint was obtained in which the first member 4a formed of isotropic graphite material and the second member 5a formed of aluminum nitride were joined by the ceramic-graphite composite material 1a containing the plurality of carbon particles 2a and the ceramic portion 3a.

The observation of the delamination condition of the carbon material joint produced in Example 7 and the three-point bending test on the carbon material joint were performed in the following manners. The results are shown, together with three-point bending strength and bulk density, in Table 3 below.

### [Observation of Delamination Condition]

The condition of joint between the first member 4a and the second member 5a after the preparation was visually observed.

### [Three-Point Bending Test]

The three-point bending strength was measured in accordance with JIS R 7222 except that the dimension of the isotropic graphite was 1.6 mm wide by 1.6 mm thick by 20 mm long, the span was 15 mm, and the crosshead speed was 0.5 mm/min.

### (Example 8)

A carbon material joint was produced in the same manner as in Example 7 except that a 1 mm thick AlN sheet was used as the second member 5a instead of the aluminum nitride tape and the firing temperature using the spark plasma sintering method was 1700°C.

Next, the observation of the delamination condition of the carbon material joint produced in Example 8 and the three-point bending test on the carbon material joint were performed in the same manners as in Example 7. The results are shown, together with three-point bending strength and bulk density, in Table 3 below.

### (Example 9)

A carbon material joint was obtained in the same manner as in Example 7 except that a 1 mm thick SiC plate was used as the second member 5a instead of the aluminum nitride tape and the firing temperature using the spark plasma sintering method was 1700°C.

Next, the observation of the delamination condition of the carbon material joint produced in Example 9 and the three-point bending test on the carbon material joint were performed in the same manners as in Example 7. The results are shown, together with three-point bending strength and bulk density, in Table 3 below.

### (Example 10)

An isotropic graphite material with a bulk density of 1.8 Mg/m³, a bending strength of 40 MPa, and a coefficient of linear thermal expansion of 4.7×10⁻⁶/K was prepared. This isotropic graphite material was used as the first member 4a.

A ceramic layer formed of an aluminum nitride tape produced in the same manner as in Example 7 was placed on the first member 4a to produce a laminate 11a.

Next, using the spark plasma sintering method, the laminate 11a was held at 1900°C for five minutes in vacuum under a pressure of 30 MPa. As a result, a carbon material joint was obtained in which the first member 4a formed of isotropic graphite material and a second member 5a in particulate form formed of aluminum nitride were directly joined.

Next, the observation of the delamination condition of the carbon material joint produced in Example 10 and the three-point bending test on the carbon material joint were performed in the same manners as in Example 7. The results are shown, together with three-point bending strength and bulk density, in Table 3 below.

### (Comparative Example 2)

Like Example 7, an isotropic graphite material with a bulk density of 1.8 Mg/m³, a three-point bending strength of 40 MPa, and a coefficient of linear thermal expansion of 4.7×10⁻⁶/K was used as the first member 4a.

Aluminum nitride powder (1.5 g) of the same type as used in producing the aluminum nitride tape in Example 7 was placed on the first member 4a and in this state the workpiece was sintered using the spark plasma sintering method in the same manner as in Example 7. However, the joining of graphite and aluminum nitride cannot be achieved.

### (Comparative Example 3)

Like Example 7, an isotropic graphite material with a bulk density of 1.8 Mg/m³, a bending strength of 40 MPa, and a coefficient of linear thermal expansion of 4.7×10⁻⁶/K was used as the first member 4a.

An aluminum nitride plate (1 mm thick) was placed on the first member 4a and in this state the workpiece was sintered using the spark plasma sintering method in the same manner as in Example 7. However, the joining of graphite and aluminum nitride cannot be achieved.

**[Table 3]**

| | Ex. 7 | Ex. 8 | Ex. 9 | Ex. 10 | Comp. Ex. 2 | Comp. Ex. 3 |
|---|---|---|---|---|---|---|
| Delamination Condition | ○ | ○ | ○ | ○ | × | × |
| Bulk Density (Mg/m³) | 1.9 | 2.4 | 2.3 | 1.9 | - | - |
| Three-Point Bending Strength (MPa) | 82 | 115 | 138 | 80 | - | - |

| | | | | | | |
|---|---|---|---|---|---|---|
| ○: not delaminated ×: delaminated | | | | | | |

### Reference Signs List

1...ceramic-carbon composite material
2...carbon particle
3...ceramic portion
4...metal material
5...jointing layer
6...joint of a metal material and a ceramic-carbon composite material
1a...ceramic-graphite composite material
2a...carbon particles
3a...ceramic portion
4a...first member
5a...second member
6a...carbon material joint
7a...jointing material
8a...laminate
9a...resin
10a...resin layer
11a...laminate
12a...carbon material joint

## Claims

1. A joint of a metal material and a ceramic-carbon composite material, in which a metal material made of a metal and a ceramic-carbon composite material including a plurality of carbon particles and a ceramic portion formed among the plurality of carbon particles and made of ceramic are joined through a joining layer, the joining layer containing a carbide of the metal and the ceramic.

2. The j oint of a metal material and a ceramic-carbon composite material according to claim 1, wherein the ceramic portion has a continuous structure.

3. The joint of a metal material and a ceramic-carbon composite material according to claim 1 or 2, wherein the ceramic is made of at least one of aluminum nitride and silicon carbide.

4. The j oint of a metal material and a ceramic-carbon composite material according to any one of claims 1 to 3, wherein the metal is made of at least one of W and Mo.

5. The j oint of a metal material and a ceramic-carbon composite material according to any one of claims 1 to 4, wherein the ceramic is silicon carbide and the joining layer contains the metal and Si.

6. A method for producing a joint of a metal material and a ceramic-carbon composite material, the method comprising: preparing a ceramic-carbon composite material which includes a plurality of carbon particles and a ceramic portion formed among the plurality of carbon particles and made of ceramic; and firing the ceramic-carbon composite material and a metal material in contact with each other.

7. The method for producing a joint of a metal material and a ceramic-carbon composite material according to claim 6, wherein the ceramic portion has a continuous three-dimensional network.

8. The method for producing a joint of a metal material and a ceramic-carbon composite material according to claim 6 or 7, wherein the ceramic-carbon composite material contains a sintering aid.

9. The method for producing a joint of a metal material and a ceramic-carbon composite material according to any one of claims 6 to 8, wherein the metal material is in powder form.

10. A carbon material joint comprising:
a first member made of a carbon material;
a second member made of carbon, ceramic or metal; and
a ceramic-graphite composite material joining the first member and the second member,
wherein the ceramic-graphite composite material includes a plurality of carbon particles and a ceramic portion formed among the plurality of carbon particles.

11. The carbon material joint according to claim 10, wherein the ceramic portion has a continuous structure.

12. The carbon material joint according to claim 10 or 11, wherein the ceramic portion is made of at least one selected from the group consisting of aluminum nitride, aluminum oxide, silicon carbide, silicon nitride, boron carbide, tantalum carbide, niobium carbide, zirconium carbide, zinc oxide, silicon oxide, and zirconium oxide.

13. A method for producing a carbon material joint including a first member made of a carbon material and a second member made of carbon, ceramic or metal and joined to the first member, the method comprising:
a laminate producing step of producing a laminate by placing, between the first member and the second member, carbon particles having ceramic attached to surfaces thereof; and
a firing step of firing the laminate.

14. The method for producing a carbon material joint according to claim 13, wherein in the laminate producing step the carbon particles having ceramic particles attached to the surfaces thereof are placed between the first member and the second member.

15. The method for producing a carbon material joint according to claim 14, wherein the ceramic particles used are ceramic particles made of at least one selected from the group consisting of aluminum nitride, aluminum oxide, silicon carbide, silicon nitride, boron carbide, tantalum carbide, niobium carbide, zirconium carbide, zinc oxide, silicon oxide, and zirconium oxide.

16. The method for producing a carbon material joint according to any one of claims 13 to 15, wherein in the laminate producing step a mixture of the carbon particles having the ceramic attached to the surfaces thereof and a resin is placed between the first member and the second member.

17. The method for producing a carbon material joint according to claim 16, wherein a thermoplastic resin is used as the resin.

18. The method for producing a carbon material joint according to claim 13, wherein in the laminate producing step a ceramic-carbon composite layer is placed between the first member and the second member, the ceramic-carbon composite layer including a plurality of carbon particles and a ceramic portion covering and connecting the plurality of carbon particles.

19. A jointing material for a carbon material joint, the jointing material being for use in joining a carbon material and a member made of carbon, ceramic or metal, the jointing material containing a plurality of carbon particles having ceramic attached to surfaces thereof.

20. The jointing material for a carbon material joint according to claim 19, wherein ceramic particles are attached to the surfaces of the carbon particles.

21. The jointing material for a carbon material joint according to claim 19 or 20, further containing a resin.

22. The jointing material for a carbon material joint according to claim 21, wherein the resin is a thermoplastic resin.

23. The jointing material for a carbon material joint according to claim 19, wherein the ceramic attached to the surfaces of the carbon particles covers and connects the plurality of carbon particles.

24. The jointing material for a carbon material joint according to any one of claims 19 to 23, the jointing material being in sheet form.

25. A method for producing a carbon material joint including a first member made of a carbon material and a second member made of carbon, ceramic or metal and joined to the first member, the method comprising the step of firing a laminate produced by placing a mixture of the second member and a resin on the first member.

26. The method for producing a carbon material joint according to claim 25, wherein the second member is in powder form.
